# EUROPÄISCHE PATENTSCHRIFT

(11) **EP 3 331 727 B1**
(45) Veröffentlichungstag und Bekanntmachung des Hinweises auf die Patenterteilung: **22.04.2020**
(21) Anmeldenummer: 16753298.5
(22) Anmeldetag: 03.08.2016
(51) Int. Cl.: B60R 5/04, B60R 11/06, B60R 13/01

(54) **EINLEGEBODEN ZUM ABDECKEN EINES STAU- ODER GEPÄCKRAUMES, VORZUGSWEISE IN EINEM KRAFTFAHRZEUG**
FLOOR PANEL FOR COVERING A CARGO SPACE, PREFERABLY FOR A MOTOR VEHICLE
PLANCHER POUR COUVRIR UN ESPACE DE CHARGEMENT OU DE BAGAGES, DE PREFERENCE DANS UN VÉHICULE AUTOMOBILE

(30) Priorität: 07.08.2015 DE 102015215181
(43) Veröffentlichungstag der Anmeldung: 13.06.2018
(73) Patentinhaber: Bayerische Motoren Werke Aktiengesellschaft, 80809 München (DE)
(72) Erfinder: FLEISCHER, Walter, 85375 Neufahrn b. Freising (DE); WICHERT, Joerg, 82194 Gröbenzell (DE); WERTICH, Bastien, 81541 München (DE)
(86) Internationale Anmeldenummer: PCT/EP2016/068533
(87) Internationale Veröffentlichungsnummer: WO 2017/025405

(56) Entgegenhaltungen:
- EP-A1- 0 419 883
- DE-A1- 2 647 104
- DE-A1-102008 030 384
- GB-A- 2 505 662
- JP-A- 2011 056 983

## Beschreibung

Die Erfindung betrifft einen Einlegeboden zum Abdecken einer Mulde im Boden eines Stau- oder Gepäckraumes, vorzugsweise in einem Kraftfahrzeug, wobei der Einlegeboden über Rastscharniere schwenkbar an einer Aufnahme gelagert ist und wobei die Rastscharniere den Einlegeboden zumindest in einer der Mulde des Stau- oder Gepäckraums zugänglichen Stellung halten.

Infolge der technischen Weiterentwicklung bei Fahrzeugreifen werden bei immer weniger Kraftfahrzeugen Reservereifen im Fahrzeug mitgeführt. Daher wird auch die Reserveradmulde nicht mehr zur Aufnahme des Reserverades benötigt, vielmehr kann dieser Bereich als zusätzlicher Stau- oder Gepäckraum genutzt werden. Zum ergonomischen Beladen dieses Bereiches, der üblicherweise mit einem verschwenkbaren Einlegeboden abgedeckt ist, muss der Einlegeboden hochgeklappt und in dieser Stellung über Rast- und Halteelemente gehalten werden. Dazu werden üblicherweise zusätzliche Verriegelungselemente oberhalb und/oder seitlich des Stau- oder Gepäckraum oder Gasdruckdämpfer verwendet.

Diese Lösungen sind jedoch kostenintensiv und bestehen aus einer Vielzahl von zu montierenden Bauteilen, was die Montagezeit negativ beeinflusst. Darüber hinaus ist bei den Fahrzeugen mit Gasdruckdämpfer keine einfache Montage bzw. Demontage des Einlegeboden durch den Nutzer möglich.

EP0419883A1 offenbart einen Einlegeboden zum Abdecken einer Mulde im Boden eines Stau- oder Gepäckraumes in einem Kraftfahrzeug, wobei der Einlegeboden über Rastscharniere schwenkbar an einer Aufnahme gelagert und von der Aufnahme abnehmbar ist.

Es ist die Aufgabe der vorliegenden Erfindung, einen Einlegeboden zum Abdecken eine Mulde im Boden eines Stau- oder Gepäckraumes, vorzugsweise in einem Kraftfahrzeug, wobei der Einlegeboden über Rastscharniere schwenkbar an einer Aufnahme gelagert ist und wobei die Rastscharniere den Einlegeboden zumindest in einer den Stau- oder Gepäckraum zugänglichen Stellung halten, zu schaffen, der kostengünstig herstellbar ist, nur aus wenigen Einzelteilen besteht und auch schnell und einfach vom Nutzer montiert bzw. demontiert werden kann.

Diese Aufgabe wird mit dem Einlegeboden nach Anspruch 1 gelöst.

Infolge dieser Ausgestaltung kann der erfindungsgemäße Einlegeboden vom Nutzer einfach und schnell montiert bzw. demontiert werden. Darüber hinaus wird die Anzahl der Bauteile verringert, was zu einer Reduzierung der Kosten und der Montagezeit führt.

Die Unteransprüche beinhalten vorteilhafte Weiterbildungen und Ausgestaltungen der Erfindung.

Gemäß einer vorteilhaften Ausgestaltung weist das Rastscharnier einen Scharnierkörper und eine Scharnierachse auf, wobei der Scharnierkörper an dem Einlegeboden und die Scharnierachse an der Aufnahme angeordnet ist.

Gemäß einer alternativen Ausgestaltung weist das Rastscharnier einen Scharnierkörper und eine Scharnierachse auf, wobei der Scharnierkörper an der Aufnahme und die Scharnierachse an dem Einlegeboden angeordnet ist.

Besonders einfach und schnell gestaltet sich die Montage bzw. Demontage des Einlegebodens, wenn gemäß einer bevorzugten Ausgestaltung der Scharnierkörper von der Scharnierachse abnehmbar ist.

Dazu ist der Scharnierkörper vorteilhafterweise mit wenigstens einem offenen Scharnierauge versehen, welches an die Scharnierachse anclipsbar ist.

Um den Einlegeboden zumindest in einer der Mulde des Stau- oder Gepäckraums zugänglichen Stellung zu halten, ist gemäß einer bevorzugten Ausgestaltung an dem Scharnierkörper ein Rastarm angeordnet.

Gemäß einer vorteilhaften Weiterbildung ist der Scharnierkörper mit zwei offenen Scharnieraugen versehen und der Rastarm ist zwischen den beiden Scharnieraugen angeordnet.

Der Rastarm kann vorteilhafterweise einstückig mit dem Scharnierkörper ausgebildet sein.

Der Rastarm wirkt vorteilhafterweise mit einem Federelement zusammen, welches an der Aufnahme angeordnet ist. Mittels dieses Federelementes kann der Einlegeboden in der Offen-Stellung gehalten werden.

Das Federelement ist bevorzugt von einer Blattfeder gebildet.

Gemäß einer vorteilhaften Weiterbildung ist das Federelement mit seinem einen Ende an der Aufnahme befestigt und weist an seinem anderen Ende eine Rastmulde zur Aufnahme eines freien Endes des Rastarmes auf.

Gemäß einer alternativ Ausgestaltung ist das Federelement mit seinem einen Ende an der Aufnahme befestigt und weist an seinem anderen Ende eine Rastnase zum Eingriff in eine Rastmulde auf, welche im Bereich des freien Endes des Rastarmes angeordnet ist.

Gemäß einer vorteilhaften Weiterbildung ist zwischen den beiden Scharnieraugen eine Öffnung vorgesehen, welche den Zugang zu einer Verzurröse ermöglicht. Somit kann das Rastscharnier neben einer den Einlegeboden offenhaltenden Funktion auch noch eine lasttragende Funktion übernehmen, indem es zum Verzurren von Lasten im Fahrzeug verwendet werden kann.

Die Öffnung ist vorteilhafterweise mit einem Blende verschließbar.

Weitere Einzelheiten, Merkmale und Vorteile der Erfindung ergeben sich aus der nachfolgenden Beschreibung anhand der Zeichnungen. Es zeigen:
- Figuren 1 bis 8: verschiedene Darstellungen eines erfindungsgemäßen Einlegebodens gemäß einer ersten Ausführungsform,
- Figuren 9 bis 13: verschiedene Darstellungen des erfindungsgemäßen Einlegebodens gemäß einer zweiten Ausführungsform, und
- Figuren 14 bis 17: verschiedene Darstellungen des erfindungsgemäßen Einlegebodens gemäß einer dritten Ausführungsform.

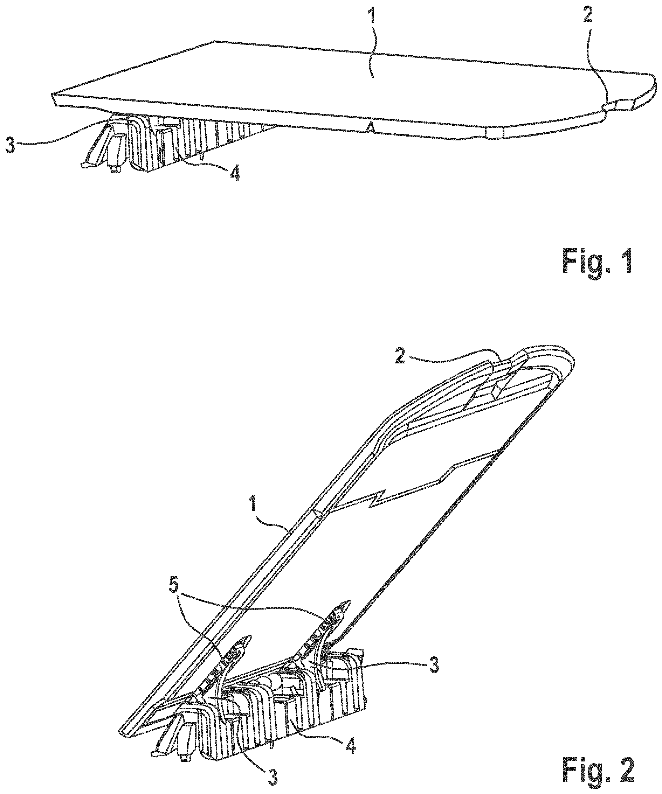

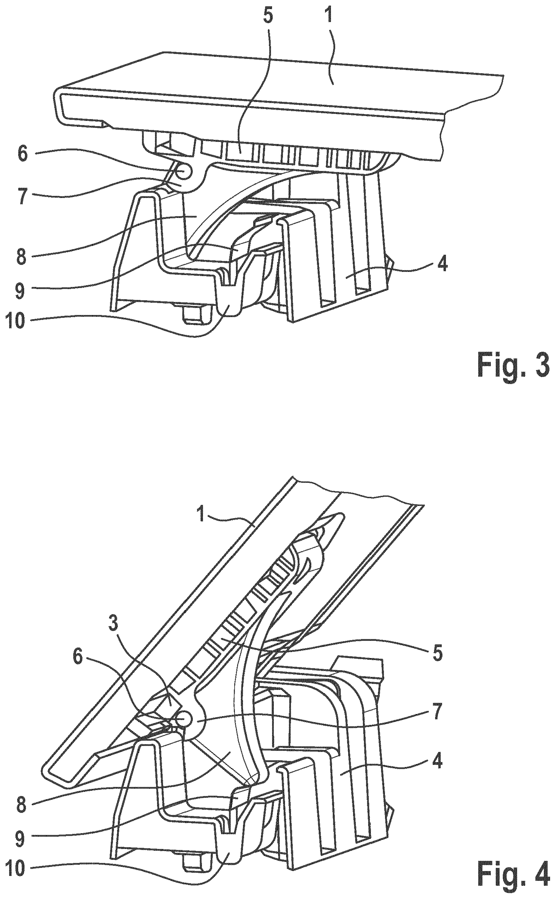

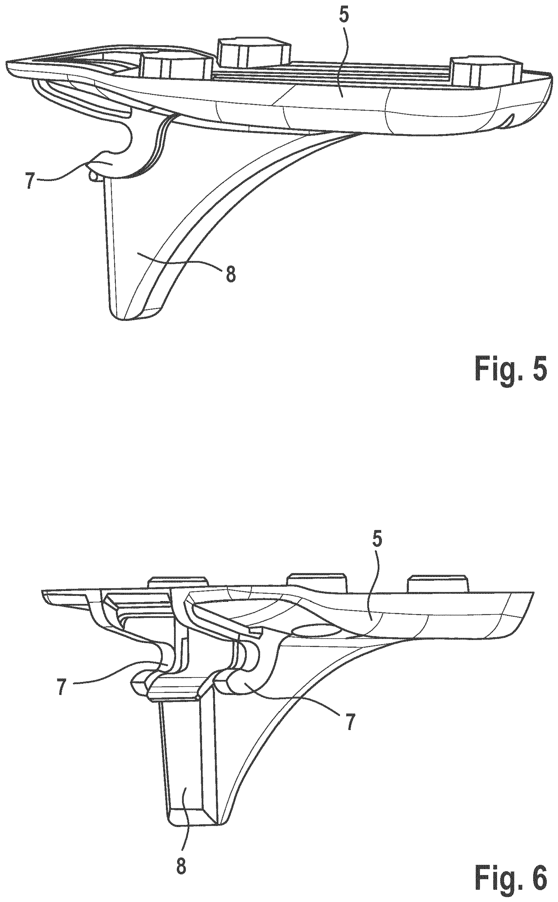

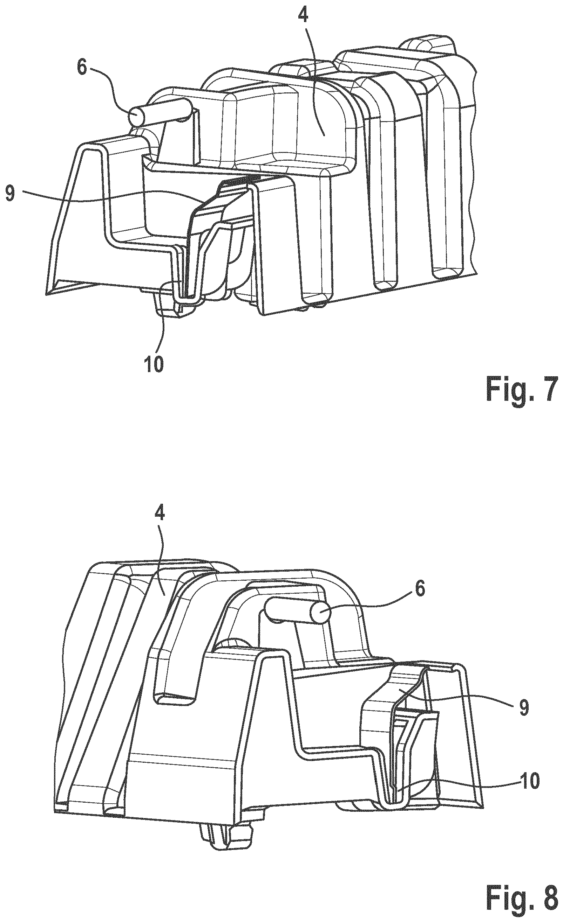

In den Figuren 1 bis 8 ist eine erste Ausführungsform des erfindungsgemäßen Einlegebodens 1 in verschiedenen Darstellungen in geöffnetem und in geschlossenem Zustand gezeigt.

Der Einlegeboden 1 kann beispielsweise zum Abdecken einer nicht dargestellten Reserveradmulde in einem Kraftfahrzeug dienen.

Der erfindungsgemäße Einlegeboden 1 besteht aus einer im Wesentlichen ebenen Platte, die beispielsweise eine im Wesentlichen rechteckige Form aufweisen kann. In einem vorderen Bereich des Einlegebodens 1 ist eine Griffmulde 2 o. dgl. vorgesehen, mit deren Hilfe der Einlegeboden 1 um Rastscharniere 3, die im hinteren Bereich des Einlegebodens 1 angeordnet sind, verschwenkt werden kann. Die Rastscharniere 3 sind einerseits mit dem Einlegeboden 1 und andererseits mit einer Aufnahme 4 verbunden, welche z. B. an der Karosserie des Kraftfahrzeuges angeordnet ist.

Im dargestellten Ausführungsbeispiel sind zwei voneinander beabstandete Rastscharniere 3 gezeigt, es können - z. B. bei einem großen Einlegeboden 1 - jedoch auch mehr oder - z. B. bei einem kleinen Einlegeboden 1 - weniger Rastscharniere 3 vorgesehen sein.

In Figur 1 ist der Einlegeboden 1 in einer die Reserveradmulde verschließenden Stellung gezeigt, während Figur 2 eine die Reserveradmulde freigebende Stellung 1 zeigt. In der in Figur 2 gezeigten, geöffneten Stellung wird der Einlegeboden 1 über die Rastscharnier 3 gehalten, so dass ein Zugang zu der Reserveradmulde möglich ist.

Die Rastscharniere 3 sind so ausgestaltet, dass der Einlegeboden 1 leicht und schnell durch den Nutzer demontiert bzw. auch wieder montiert werden kann.

Die beiden Rastscharniere 3 sind gleich ausgebildet, so dass im Folgenden nur noch ein Rastscharnier 3 beschrieben und erläutert wird.

Das Rastscharnier 3, das beispielsweise als Spritzgussteil hergestellt ist, weist einen Scharnierkörper 5 auf, welcher um eine Scharnierachse 6 verschwenkbar ist.

Die Anordnung ist so getroffen, dass der Scharnierkörper 5 an dem Einlegeboden 1 und die Scharnierachse 6 an der Aufnahme 4 angeordnet ist. Grundsätzlich ist jedoch auch eine Ausgestaltung denkbar, bei welcher der Scharnierkörper 5 an der Aufnahme 4 und die Scharnierachse 6 an dem Einlegeboden 1 angeordnet ist.

Die Aufnahme 4 und die Scharnierachse 6 können aus Metall, z. B. Stahl, gefertigt sein. In diesem Fall können Aufnahme 4 und Scharnierachse 6 getrennte Bauteile sein, welche in einer geeigneten Art und Weise miteinander verbunden sind. Die Aufnahme 4 kann jedoch auch als Spritzgussteil hergestellt werden. In diesem Fall können Aufnahme 4 und Scharnierachse 6 einstückig miteinander verbunden sein. Des Weiteren ist es möglich, die Aufnahme 4 als Spritzgussteil herzustellen und die Scharnierachse 6 als Einlegeteil aus Metall.

Um den Einlegeboden 1 zu demontieren, kann der Scharnierkörper 3 von der Scharnierachse 6 abgenommen werden. Dazu ist der Scharnierkörper 5 mit zwei voneinander beabstandeten offenen Scharnieraugen 7 versehen ist, welche an die Scharnierachse 6 anclipsbar ist; d. h. die Öffnung des Scharnierauges 7 hat ein Öffnungsmaß, welche kleiner ist als der Durchmesser der Scharnierachse 6, so dass beim Aufstecken bzw. Abziehen des Einlegebodens 1 auf bzw. von der Aufnahme 4 das Scharnierauge 7 aufgeweitet wird, um die Scharnierachse 6 passieren zu lassen.

Alternativ kann die Scharnierachse 6 auch mit zwei gegenüberliegenden Abflachungen versehen sein, so dass in einer bestimmten gegenseitigen Stellung von Scharnierkörper 5 und Scharnierachse 6 der Einlegeboden 1 ohne Aufweitung des Scharnierauges 7 von der Scharnierachse 6 abgenommen bzw. aufgesteckt werden kann.

Um den Einlegeboden 1 in seiner geöffneten Stellung zu fixieren, ist an dem Scharnierkörper 5 ein Rastarm 8 angeordnet ist, der zwischen den beiden Scharnieraugen 7 angeordnet ist und im Wesentlichen senkrecht von dem Scharnierkörper 5 in Richtung der Aufnahme 4 vorsteht. Der Rastarm 8 kann einstückig mit dem Scharnierkörper 5 ausgebildet oder auch in einer anderen geeigneten Art und Weise mit dem Scharnierkörper 5 verbunden sein.

Der Rastarm 8 wirkt mit einem Federelement 9 zusammen, welches an der Aufnahme 4 angeordnet und als Blattfeder ausgebildet ist. In geöffnetem Zustand des Einlegebodens 1 verrastet der Rastarm 8 mit dem Federelement 9 und hält damit den Einlegeboden 1 in einer Stellung, in welcher der Stau- oder Gepäckraum frei zugänglich ist.

Bei der ersten Ausführungsform nach den Figuren 1 bis 8 ist das Federelement 9 mit seinem einen Ende in einer Tasche 10 der Aufnahme 4 befestigt. An seinem anderen Ende ist eine Rastmulde vorgesehen, in welche das freie End des Rastarmes 8 in der geöffneten Stellung des Einlegebodens 1 eingreift und den Einlegeboden 1 sicher verrastet.

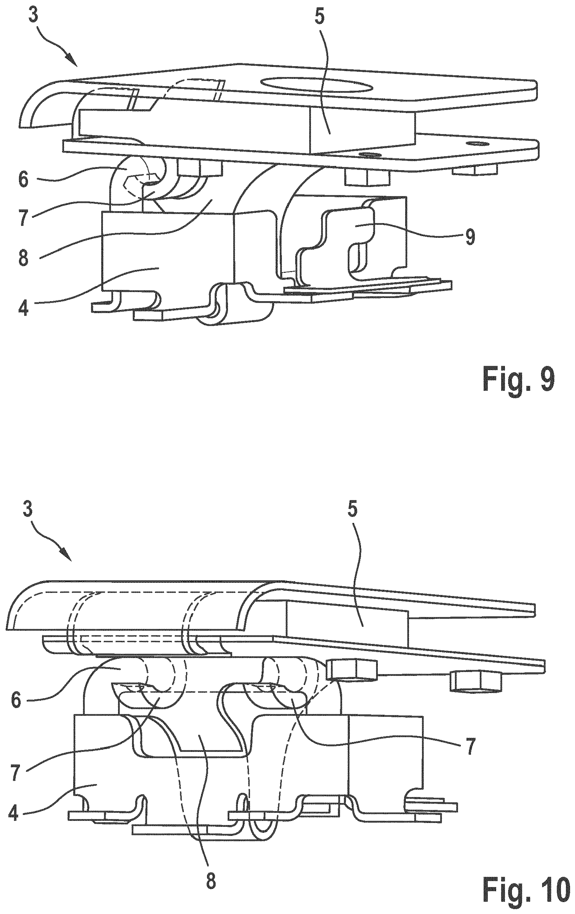

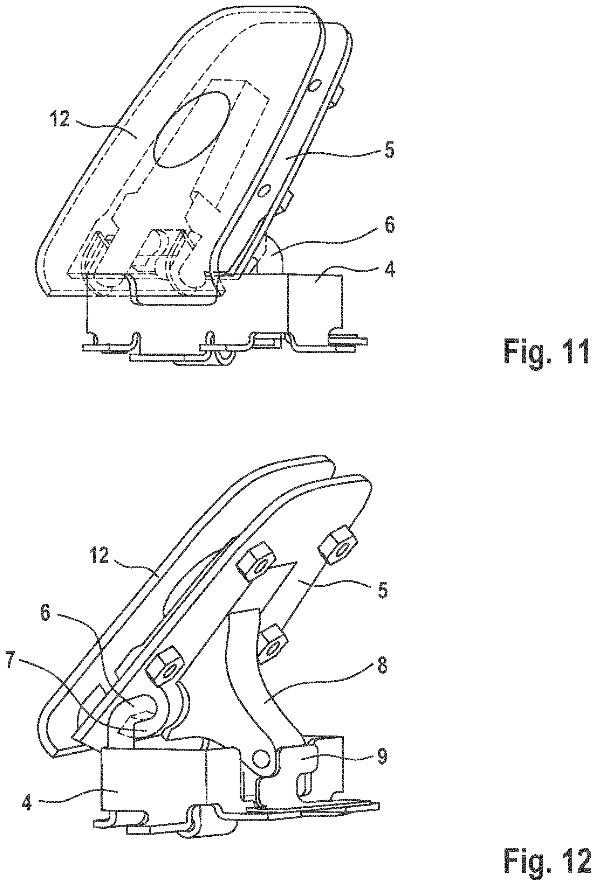

Bei dem in den Figuren 9 bis 13 gezeigten zweiten Ausführungsform ist das Federelement 9 nicht in einer Tasche der Aufnahme 4 angeordnet, sondern fest mit der Aufnahme 4 verbunden, z. B. durch Schweißen, Kleben, Schrauben o. dgl.

Darüber hinaus ist bei dieser Ausführungsform zwischen den beiden Scharnieraugen 7 eine Öffnung 11 vorgesehen ist, welche den Zugang zu einer (nicht dargestellten) Verzurröse ermöglicht. Somit kann die Aufnahme 4 zwei Funktionen, nämlich "Halten des Einlegebodens 1" und "Verzurren im Fahrzeug" übernehmen.

Die Öffnung 11 zwischen den beiden Scharnieraugen 7 kann bei Bedarf mittels einer Blende 12 verschlossen werden.

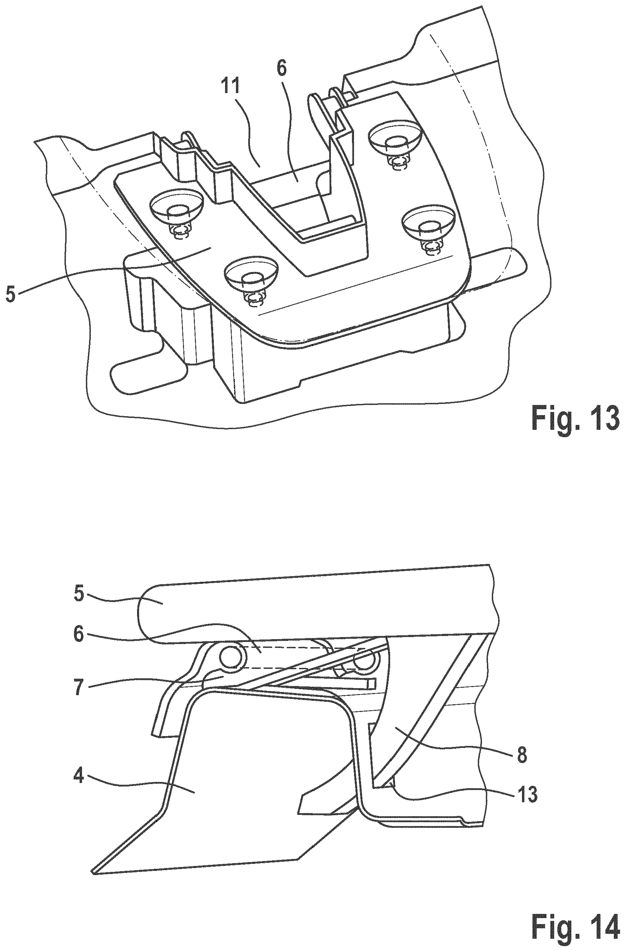

In den Figuren 14 bis 17 ist eine dritte Ausführungsform gezeigt, die besonders dann zum Einsatz kommen kann, wenn nicht genügend Platz für den Einbau eines Einlegebodens 1 nach der ersten bzw. zweiten Ausführungsform zu Verfügung steht.

Bei dieser dritten Ausführungsform steht der Rastarm 8 nicht im Wesentlichen senkrecht von dem Scharnierkörper 5 in Richtung der Aufnahme 4 vor, wie bei den Ausführungsformen nach den Figuren 1 bis 13, sondern er weist einen bogenförmigen Verlauf auf, wobei der Mittelpunkt des Bogens in etwa im Bereich der Scharnierachse 6 liegt. Dadurch nimmt der Rastarm 8 weniger Platz in Anspruch.

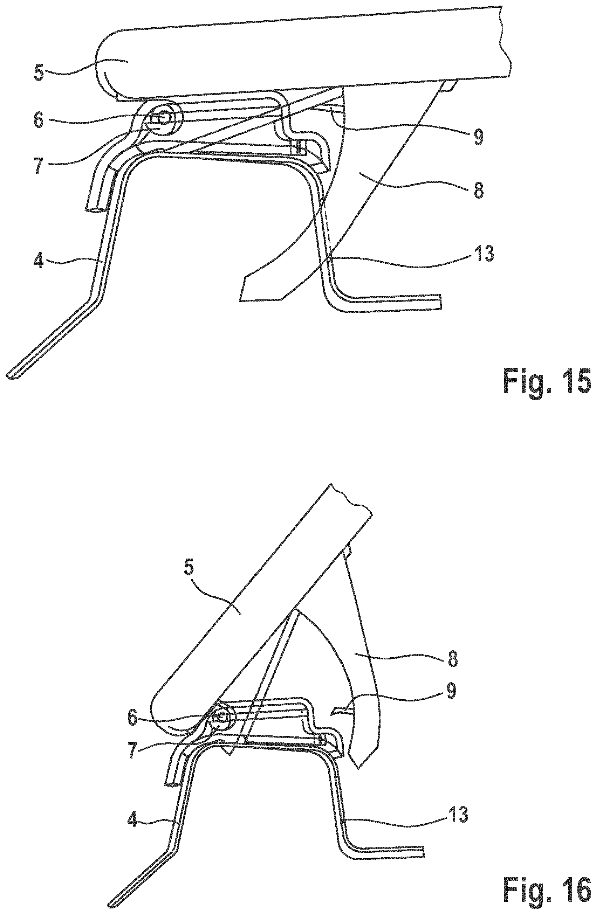

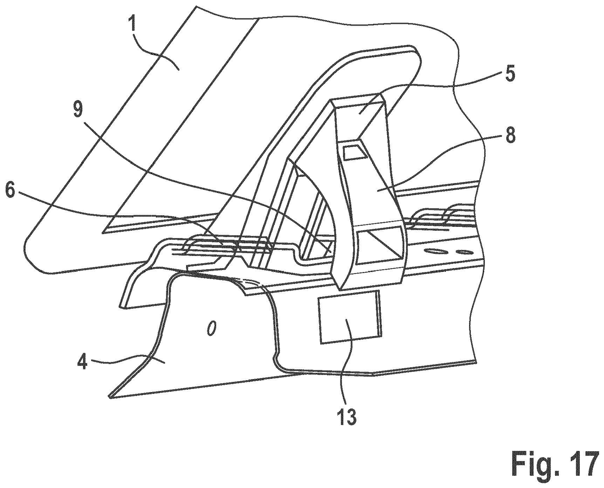

Des Weiteren weist das Federelement 9, das mit seinem einen Ende an der Aufnahme 4 befestigt ist, an seinem anderen Ende eine Rastnase zum Eingriff in eine Rastmulde aufweist, welche im Bereich des freien Endes des Rastarmes 8 angeordnet ist. Somit kann auch bei dieser Ausführungsform der Einlegeboden 1 sicher in der geöffneten Stellung gehalten werden (vgl. Figuren 16 und 17).

Damit der Rastarm 8 beim Schließen des Einlegebodens 1 nicht mit der Aufnahme 4 kollidiert, ist in der Aufnahme 4 eine Durchtrittsöffnung 13 vorgesehen, durch welche der Rastarm 4 in geschlossenem Zustand hindurchtritt (vgl. Figuren 14 und 15).

Die vorhergehende Beschreibung der vorliegenden Erfindung dient nur zu illustrativen Zwecken und nicht zum Zwecke der Beschränkung der Erfindung.

### Bezugszeichenliste

- 1: Einlegeboden
- 2: Griffmulde
- 3: Rastscharnier
- 4: Aufnahme
- 5: Scharnierkörper
- 6: Scharnierachse
- 7: Scharnierauge
- 8: Rastarm
- 9: Federelement
- 10: Tasche
- 11: Öffnung
- 12: Blende
- 13: Durchtrittsöffnung

## Patentansprüche

1. Einlegeboden (1) zum Abdecken einer Mulde im Boden eines Stau- oder Gepäckraumes, vorzugsweise in einem Kraftfahrzeug, wobei:
- der Einlegeboden (1) über Rastscharniere (3) schwenkbar an einer Aufnahme (4) gelagert ist,
- die Rastscharniere (3) eingerichtet sind, den Einlegeboden (1) zumindest in einer der Mulde des Stau- oder Gepäckraums zugänglichen Stellung zu halten, und
- der Einlegeboden (1) von der Aufnahme (4) abnehmbar ist.

2. Einlegeboden (1) nach Anspruch 1, **dadurch gekennzeichnet, dass** das Rastscharnier (3) einen Scharnierkörper (5) und eine Scharnierachse (6) aufweist, und dass der Scharnierkörper (5) an dem Einlegeboden (1) und die Scharnierachse (6) an der Aufnahme (4) angeordnet ist.

3. Einlegeboden (1) nach Anspruch 1, **dadurch gekennzeichnet, dass** das Rastscharnier (3) einen Scharnierkörper (5) und eine Scharnierachse (6) aufweist, wobei der Scharnierkörper (5) an der Aufnahme (4) und die Scharnierachse (6) an dem Einlegeboden (1) angeordnet ist.

4. Einlegeboden (1) nach Anspruch 2 oder 3, **dadurch gekennzeichnet, dass** der Scharnierkörper (5) von der Scharnierachse (6) abnehmbar ist.

5. Einlegeboden (1) nach einem der Ansprüche 2 bis 4, **dadurch gekennzeichnet, dass** der Scharnierkörper (5) mit wenigstens einem offenen Scharnierauge (7) versehen ist, welches an die Scharnierachse (6) anclipsbar ist.

6. Einlegeboden (1) nach einem der Ansprüche 2 bis 5, **dadurch gekennzeichnet, dass** an dem Scharnierkörper (5) ein Rastarm (8) angeordnet ist.

7. Einlegeboden (1) nach Anspruch 6, **dadurch gekennzeichnet, dass** der Scharnierkörper (5) mit zwei offenen Scharnieraugen (7) versehen ist und dass der Rastarm (8) zwischen den beiden Scharnieraugen (7) angeordnet ist.

8. Einlegeboden (1) nach einem der Ansprüche 6 bis 7, **dadurch gekennzeichnet, dass** der Rastarm (8) einstückig mit dem Scharnierkörper (5) ausgebildet ist.

9. Einlegeboden (1) nach einem der Ansprüche 6 bis 8, **dadurch gekennzeichnet, dass** der Rastarm (8) mit einem Federelement (9) zusammenwirkt, welches an der Aufnahme (4) angeordnet ist.

10. Einlegeboden (1) nach Anspruch 9, **dadurch gekennzeichnet, dass** das Federelement (9) von einer Blattfeder gebildet ist.

11. Einlegeboden (1) nach einem der Ansprüche 9 bis 10, **dadurch gekennzeichnet, dass** das Federelement (9) mit seinem einen Ende an der Aufnahme (4) befestigt ist und an seinem anderen Ende eine Rastmulde zur Aufnahme eines freien Endes des Rastarmes (8) aufweist.

12. Einlegeboden (1) nach einem der Ansprüche 9 bis 10, **dadurch gekennzeichnet, dass** das Federelement (9) mit seinem einen Ende an der Aufnahme (4) befestigt ist und an seinem anderen Ende eine Rastnase zum Eingriff in eine Rastmulde aufweist, welche im Bereich des freien Endes des Rastarmes (8) angeordnet ist.

13. Einlegeboden (1) nach einem der Ansprüche 7 bis 12, **dadurch gekennzeichnet, dass** zwischen den beiden Scharnieraugen (7) eine Öffnung (11) vorgesehen ist, welche den Zugang zu einer Verzurröse ermöglicht.

14. Einlegeboden (1) nach Anspruch 13, **dadurch gekennzeichnet, dass** die Öffnung (11) mit einer Blende (12) verschließbar ist.

## Claims

1. Insert flooring (1) for covering a trough in the floor of a storage or luggage compartment, preferably in a motor vehicle,
- the insert flooring (1) being pivotably mounted on a receptacle (4) via clip-on hinges (3),
- the clip-on hinges (3) being arranged to hold the insert flooring (1) at least in a position accessible to the trough of the storage or luggage compartment, and
- the insert flooring (1) being removable from the receptacle (4).

2. Insert flooring (1) according to Claim 1, **characterised in that** the clip-on hinge (3) has a hinge body (5) and a hinge axis (6) and **in that** the hinge body (5) is arranged on the insert flooring (1) and the hinge axis (6) is arranged on the receptacle (4).

3. Insert flooring (1) according to Claim 1, **characterised in that** the clip-on hinge (3) has a hinge body (5) and a hinge axis (6), the hinge body (5) being arranged on the receptacle (4) and the hinge axis (6) being arranged on the insert flooring (1).

4. Insert flooring (1) according to Claim 2 or 3, **characterised in that** the hinge body (5) is removable from the hinge axis (6).

5. Insert flooring (1) according to one of Claims 2 to 4, **characterised in that** the hinge body (5) has at least one open hinge eye (7), which can be clipped onto the hinge axis (6).

6. Insert flooring (1) according to one of Claims 2 to 5, **characterised in that** a clip-in arm (8) is arranged on the hinge body (5).

7. Insert flooring (1) according to Claim 6, **characterised in that** the hinge body (5) has two open hinge eyes (7) and that the clip-in arm (8) is arranged between the two hinge eyes (7).

8. Insert flooring (1) according to one of Claims 6 to 7, **characterised in that** the clip-in arm (8) is formed integrally with the hinge body (5).

9. Insert flooring (1) according to one of Claims 6 to 8, **characterised in that** the clip-in arm (8) cooperates with a spring element (9), which is arranged on the receptacle (4).

10. Insert flooring (1) according to Claim 9, **characterised in that** the spring element (9) is formed from a leaf spring.

11. Insert flooring (1) according to one of Claims 9 to 10, **characterised in that** the spring element (9) is fastened at one end to the receptacle (4) and has a clip-in recess at its other end for receiving a free end of the clip-in arm (8).

12. Insert flooring (1) according to one of Claims 9 to 10, **characterised in that** the spring element (9) is fastened at one end to the receptacle (4) and has a latch at its other end for engaging in a clip-in recess, which is arranged in the region of the free end of the clip-in arm (8).

13. Insert flooring (1) according to one of Claims 7 to 12, **characterised in that** an opening (11) is provided between the two hinge eyes (7), which allows access to a lashing eye.

14. Insert flooring (1) according to Claim 13, **characterised in that** the opening (11) can be closed with a shutter (12).

## Revendications

1. Tablette (1) destinée à recouvrir une cuvette au fond d'un espace de stockage ou d'un espace de bagages, en particulier dans un véhicule dans laquelle :
- la tablette (1) est montée pivotante sur un élément de réception (4) par l'intermédiaire de charnières à détente (3),
- les charnières à détente (3) sont réalisées pour permettre de maintenir la tablette (1) au moins dans une position permettant d'accéder à la cuvette de l'espace de stockage ou de l'espace de bagages, et
- la tablette (1) peut être enlevée de la cuvette (4).

2. Tablette (1) conforme à la revendication 1,
**caractérisée en ce que**
la charnière à détente (3) comporte un corps de charnière (5) et un axe de charnière (6) et le corps de charnière (5) est installé sur la tablette (1) tandis que l'axe de charnière (6) est monté sur le logement (4).

3. Tablette (1) conforme à la revendication 1,
**caractérisée en ce que**
la charnière d'arrêt (3) comporte un corps de charnière (5) et un axe de charnière (6) et le corps de charnière (5) est monté sur l'élément de réception (4) tandis que l'axe de charnière (6) est monté sur la tablette (1).

4. Tablette (1) conforme à la revendication 2 ou 3,
**caractérisée en ce que**
le corps de charnière (5) peut être enlevé de l'axe de charnière (6).

5. Tablette (1) conforme à l'une des revendications 2 à 4,
**caractérisée en ce que**
le corps de charnière (5) est équipé d'au moins un œil de charnière ouvert (7) qui peut être enclipsé sur l'axe de charnière (6).

6. Tablette (1) conforme à l'une des revendications 2 à 5,
**caractérisée en ce qu'**
un bras d'encliquetage (8) est monté sur le corps de charnière (5).

7. Tablette (1) conforme à la revendication 6,
**caractérisée en ce que**
le corps de charnière (5) est équipé de deux yeux de charnière ouverts (7) et le bras d'encliquetage (8) est monté entre les deux yeux de charnière (7).

8. Tablette (1) conforme à l'une des revendications 6 et 7,
**caractérisée en ce que**
le bras d'encliquetage (8) est réalisé en une seule pièce avec le corps de charnière (5).

9. Tablette (1) conforme à l'une des revendications 6 à 8,
**caractérisée en ce que**
le bras d'encliquetage (8) coopère avec un élément de ressort (9) qui est monté sur l'élément de réception (4).

10. Tablette (1) conforme à la revendication 9,
**caractérisée en ce que**
l'élément de ressort (9) est formé par un ressort à lame.

11. Tablette (1) conforme à l'une des revendications 9 et 10,
**caractérisée en ce que**
l'élément de ressort (9) est fixé à l'élément de réception (4) par une extrémité et comporte à son autre extrémité une cuvette d'encliquetage permettant la réception de l'extrémité libre du bras d'encliquetage (8).

12. Tablette (1) conforme à l'une des revendications 9 et 10,
**caractérisée en ce que**
l'élément de ressort (9) est fixé par une extrémité sur l'élément de réception (4) et comporte à son autre extrémité un bec d'encliquetage destiné à venir en prise dans une cuvette d'encliquetage qui est située dans la zone de l'extrémité libre du bras d'encliquetage (8).

13. Tablette (1) conforme à l'une des revendications 7 à 12,
**caractérisée en ce qu'**
il est prévu entre les deux yeux de charnière (7) une ouverture (11) qui permet l'accès à un œillet d'arrimage.

14. Tablette (1) conforme à la revendication 13,
**caractérisée en ce que**
l'ouverture (11) peut être fermée par un écran (12).
